# EUROPÄISCHE PATENTSCHRIFT

(11) **EP 1 691 991 B1**
(45) Veröffentlichungstag und Bekanntmachung des Hinweises auf die Patenterteilung: **03.04.2013**
(21) Anmeldenummer: 04798100.6
(22) Anmeldetag: 26.11.2004
(51) Int. Cl.: B44C 5/04, B32B 27/04

(54) **DEKORLAMINAT UND DEKORLAMINATPLATTE UND VERFAHREN ZUM HERSTELLEN BEIDER**
DECORATIVE LAMINATE AND DECORATIVE LAMINATE PANEL,AND A METHOD FOR PRODUCING THE TWO
STRATIFIE DECORATIF ET PROCEDE DE FABRICATION ASSOCIE

(30) Priorität: 26.11.2003 DE 10355180
(43) Veröffentlichungstag der Anmeldung: 23.08.2006
(73) Patentinhaber: Linnemann, Thomas C., 5026 Salzburg (AT)
(72) Erfinder: LINNEMANN, Thomas, C., A-5026 Salzburg (AT); HÖGLINGER, Gerald, A-4861 Schörfling (AT)
(74) Vertreter: Schorr, Frank Jürgen
(86) Internationale Anmeldenummer: PCT/EP2004/013458
(87) Internationale Veröffentlichungsnummer: WO 2005/051637

(56) Entgegenhaltungen:
- EP-A- 0 130 072
- EP-A- 0 472 036
- EP-A- 0 732 449
- EP-A- 0 875 399
- US-A- 3 798 111
- US-A- 4 499 137

## Beschreibung

Die vorliegende Erfindung betrifft ein Dekorlaminat, eine Dekorlaminatplatte sowie ein Verfahren zum Herstellen des Dekorlaminats bzw. der Dekorlaminatplatte.

Dekorlaminate finden im Bereich von Bodenbelägen, Arbeits- und Tischplatten zunehmend Verwendung. Entsprechend der Einsatzbereiche sind Eigenschaften wie Abriebfestigkeit und Abnutzungsbeständigkeit von entscheidender Bedeutung für die Güte eines solchen Dekorlaminats bzw. einer solchen Dekorlaminatplatte. Außerdem sind die für den optischen Eindruck verantwortlichen Eigenschaften wesentlich, wie etwa Transparenz und Farbeindruck des Laminatmusters bzw. der Dekorlaminatoberfläche. Dekorlaminatplatten bestehen üblicherweise aus drei Hauptkomponenten: einer Schutzschicht (obersten Schicht), eine ein Muster aufweisende, von der Schutzschicht bedeckte Dekorschicht und ein Trägersubstrat zum Tragen der Schutz- und Dekorschicht. Dementsprechend sind insbesondere die Eigenschaften der Schutzschicht bzw. obersten Schicht für die Qualität des Dekorlaminats entscheidend.

Herkömmlich wird auf eine Dekorbahn ein sogenanntes "overlay" aufgebracht, ein mit einem Harz imprägnierter hochwertiger Deckpapier- bzw. Überzugsbogen, welcher beim Verpressen transparent wird. Im Zuge von Bemühungen, die Abriebfestigkeit der Dekorlaminate und insbesondere der obersten Schicht zu verbessern, wurde begonnen, harte Partikel, wie etwa aus Siliziumdioxid, in die oberste Schicht einzubringen. Viele Hersteller von Dekorlaminaten hatten jedoch Probleme, eine homogene Verteilung dieser Partikel im bzw. auf dem Überzugsbogen (overlay) und somit in der obersten Schicht zu erreichen.

Daher begann eine Entwicklung dahingehend, Überzugsbögen durch Partikel enthaltende Kunstharzschichten zu ersetzen. Hierzu wird herkömmlicherweise ein solches Dekorlaminat dadurch hergestellt, daß eine mit einem Muster versehene Papierbahn mit einem hitzehärtbaren Harz getränkt und durch Druck und Hitze entweder ganz oder nur teilweise gehärtet wird, eventuell zusammen mit einer ebenfalls harzgetränkten Trägerbahn. Anschließend wird die so beschichtete Papierbahn auf ein Trägersubstrat aufgebracht, bei einem vollständig gehärteten Dekorlaminat durch z.B. Kleben, bei einem nur teils gehärteten Dekorlaminat durch zusätzliche Druck- und Hitzeeinwirkung. Solche Dekorlaminate weisen zuweilen bessere Transparenz und somit einen besseren optischen Eindruck des Musters auf.

Eine Verbesserung der Eigenschaften der für die Dekorlaminateigenschaften wesentlichen Schutzschicht, sowohl unter Verwendung als auch ohne Verwendung von Überzugsbögen, wird kontinuierlich vorangetrieben. Dementsprechend liegen eine Vielzahl von Konzepten für Schutzschichten mit verbesserter Qualität vor. Diese betreffen vor allem die Partikel sowie die Einbindung der Partikel in das Kunststoffharz. Im Zuge der Verwendung harter Partikel ergaben sich bei der Herstellung nämlich Probleme dadurch, daß die für Hitze- und Druckapplikation verwendeten Werkzeuge, beispielsweise Heißpressen, durch die neuen Schichten Schaden nahmen. Dies war insbesondere darauf zurückzuführen, daß Teile der Partikel aus der Kunstharzoberfläche herausstanden bzw. -ragten und aufgrund ihrer Härte zu erhöhtem Verschleiß der Werkzeuge führte.

Entsprechend gehen Bestrebungen dahin, die Einbindung der Partikel im Kunstharz zu verbessern. Ansätze sehen vor, die Verteilung der Partikel in der zur Herstellung der Schutzschicht verwendeten Suspension vor dem Auftragen zu verbessern, beispielsweise durch Zusatz von α-Cellulose, wie etwa in der Offenlegungsschrift EP 0 732 449 A1 geschildert.

Obwohl bereits Erfolge erzielt wurden, besteht immer noch.ein Bedarf an bezüglich der Partikeleinbindung verbesserten Dekorlaminaten bzw. Dekorlaminatplatten. Eine recht ausführliche Zusammenfassung des Standes der Technik findet sich im europäischen Patent EP 0 875 399 B1.

Die europäische Patentanmeldung EP 0 130 072 A1 offenbart ein Dekorlaminat, bei dessen Herstellung eine Trocknung unterhalb einer Schmelzktemperatur eines Beschidtungswachses stattfindet. Es ist daher eine Aufgabe der Erfindung, Dekorlaminate und Dekorlaminatplatten bereitzustellen, in denen, zumindest während des Herstellungsvorgangs, eine verbesserte Einbindung der Partikel in der Schutzschicht bzw. dem der Schutzschicht zugrundeliegenden aufgetragenen Gemisch vorliegt, und die demgemäß verbesserte Oberflächeneigenschaften der Schutzschicht aufweisen.

Außerdem ist es eine Aufgabe der Erfindung, ein Verfahren zum Herstellen solcher Dekorlaminate und Dekorlaminatplatten bereitzustel len, bei welchem eine verringerte Abnutzung bzw. Beschädigung der Presswerkzeuge auftritt.

Diese Aufgabe wird erfindungsgemäß gelöst durch ein Verfahren zum Herstellen eines Dekor-Prepregbogens gemäß Anspruch 1. Weiterhin wird die Aufgabe gelöst durch einen Dekor-Prepregbogen gemäß Anspruch 28, ein Dekorlaminat gemäß Anspruch 29 sowie eine Dekorlaminatplatte gemäß Anspruch 39. Bevorzugte Ausführungsformen sind Gegenstand der jeweiligen abhängigen Ansprüche.

Gemäß einem ersten Vorteil der Erfindung wird ein Verfahren zum Herstellen eines Dekorlaminats bereitgestellt, welches umfaßt: Bereitstellen einer Dekorschicht, Aufbringen eines Gemisches, welches ein hitzehärtbares Kunstharz und harte Partikel umfaßt, auf die Dekorschicht, und Verpressen der Dekorschicht und des Gemisches in einer Heißpresse bei einer Pressentemperatur zu einem Laminat, wobei das Gemisch ferner wenigstens ein Wachs umfaßt, dessen Schmelzbereich unterhalb einer Temperatur von etwa 140°C liegt.

Gemäß einem zweiten Vorteil der Erfindung wird ein Verfahren zum Herstellen eines Dekorlaminats bereitgestellt, welches umfaßt: Bereitstellen einer Dekorschicht, Aufbringen eines Gemisches, welches wenigstens ein hitzehärtbares Kunstharz und harte Partikel umfaßt, auf die Dekorschicht, und Verpressen der Dekorschicht und des Gemisches in einer Heißpresse bei einer Pressentemperatur zu einem Laminat, wobei das Gemisch ferner wenigstens ein Wachs umfaßt, dessen Schmelzbereich um mehr als etwa 50°C unterhalb der Pressentemperatur liegt.

Ein dritter Vorteil der Erfindung betrifft ein Verfahren zum Herstellen einer Dekorlaminatplatte, welches umfaßt: Bereitstellen einer Dekorschicht, Aufbringen eines Gemisches, welches ein hitzehärtbares Kunstharz und harte Partikel umfaßt, auf die Dekorschicht, Anordnen der Dekorschicht über einem Trägersubstrat, und Verpressen des Trägersubstrats, der Dekorschicht und des Gemisches in einer Heißpresse bei einer Pressentemperatur zu einer Dekorlaminatplatte, wobei das Gemisch ferner wenigstens ein Wachs umfaßt, dessen Schmelzbereich unterhalb einer Temperatur von etwa 140°C liegt und/oder dessen Schmelzbereich um mehr als etwa 50°C unterhalb der Pressentemperatur liegt.

Gemäß einem vierten Vorteil der Erfindung wird ein Dekorlaminat bereitgestellt, welches umfaßt: eine Dekorschicht, und eine mit der Dekorschicht fest verbundene Schutzschicht aus einem Gemisch aus wenigstens einem hitzegehärteten Kunstharz, harten Partikeln und wenigstens einem Wachs, dessen Schmelzbereich unterhalb einer Temperatur von etwa 140°C liegt.

Ein derartiges Dekorlaminat ist gemäß den erfindungsgemäßen Verfahren erhältlich.

Ein fünfter Vorteil der Erfindung betrifft eine Dekorlaminatplatte, welche ein Trägersubstrat umfaßt, auf welchem ein Dekorlaminat gemäß dem vierten Vorteil der Erfindung aufgebracht ist. Dabei kann beispielsweise das Dekorlaminat unmittelbar auf dem Trägersubstrat aufgebracht sein oder zwischen Trägersubstrat und Dekorlaminat eine oder mehrere Trägerschichten angeordnet sein.

Ein sechster Vorteil der Erfindung betrifft einen Dekor-Prepregbogen und dessen Herstellung, welche das Aufbringen eines hitzehärtbaren Kunstharzes, harter Partikel und eines unter 140 °C schmelzenden Wachses auf eine Dekorschicht und anschliessendes Trocknen oberhalb des Schmelzbereiches des Wachses umfaßt.

Es wurde von den Erfindern gefunden, daß sich Dekorlaminate, und insbesondere Schutzschichten von Dekorlaminaten, mit besonders vorteilhaften Eigenschaften herstellen lassen, wenn ein Wachs oder Wachsgemisch der oben bezeichneten Eigenschaften, und insbesondere in den erfindungsgemäßen Verfahren verwendet wird. Insbesondere hat sich herausgestellt, daß ein Zusatz eines solchen, geeigneten Wachses oder Wachsgemischs zu dem aufzubringenden Gemisch zu einer besseren Einbindung der harten Partikel in der Schutzschicht führt. Der Zusatz des Wachses (oder Wachsgemischs) wirkt sich daher insbesondere im Herstellungsprozess günstig auf die Werkzeugbeanspruchung aus. Es wird seitens des Erfinders vermutet, daß das verwendete Wachs (oder Wachsgemisch) beim Herstellungsprozess, insbesondere beim Heißpressen, praktisch vollständig aufschmilzt und, besonders bei niedriger Schmelzviskosität des Wachses, eine Gleitwirkung für die Partikel zumindest im flüssigen, aufzubringenden Gemisch bereitstellt. Diese Gleitwirkung erlaubt es insbesondere Partikeln mit scharfen Kanten, sich weitgehend ungestört aneinander vorbei zu bewegen und somit Agglomerationen von Partikeln zu verhindern, welche einer homogenen Partikelverteilung sowohl im auf die Dekorschicht aufgebrachten, noch flüssigen wie auch dem gehärteten Gemisch, abträglich wäre. Außerdem wird vermutet, daß sich das beim Heißpressen schmelzende Wachs (oder Wachsgemisch) bevorzugt an der einer Pressfläche zugewandten Oberfläche des aufgebrachten Gemischs anreichert und somit die harten Partikel von der Oberfläche, welche später die Gebrauchs- bzw. Sichtseite bildet, zumindest teilweise gewissermaßen verdrängt. Beim späteren Gebrauch des Dekorlaminats, oder durch eine spezielle Vorbehandlung, erfolgt ein Abtrag von der Oberfläche, insbesondere Wachs von oberflächennahen Partikeln, wodurch eine definierte Rauhigkeit erzielt wird.

Auch beim Herstellen des Dekor-Prepregbogens wird die Temperatur zur Trocknung derart gewählt, daß das Wachs während des Trockenvorgangs aufschmilzt, um die vorteilhafte Wirkung des Wachses bei der Herstellung des Dekor-Prepregbogens bzw. des Dekorlaminats bzw. der Dekorlaminatplatte zu entfalten.

Es hat sich gezeigt, daß eine bessere Einbindung der Partikel in der Schutzschicht, insbesondere in den Kunstharzverband der Schutzschicht, bewirkt und eine Anzahl aus dem aufgetragenen Gemischs herausstehender Partikelspitzen bzw. -teile während des Herstellungsprozesses wesentlich verringert werden kann.

Außerdem hat sich überraschend gezeigt, daß die erfindungsgemäßen Dekorlaminate verglichen mit herkömmlichen Dekorlaminaten aufgrund dieser neuen Art von Schutzschicht einen sehr vorteilhaften, warmen Holzton aufweisen.

Die Schutzschicht des erfindungsgemäßen Dekorlaminats ist dazu eingerichtet, das Dekorlaminat bzw. die Dekorlaminatplatte sicht- und gebrauchsseitig abzuschließen. Unter der Pressentemperatur ist die Solltemperatur zu verstehen, auf die eine Preß-Fläche einer Heißpresse für den Verpreß-Vorgang eingestellt ist.

Der Begriff "Wachs" ist im Kontext dieser Beschreibung im Sinne seiner phänomenologischen Bedeutung zu verstehen, und soll, in Anlehnung an Römpp, Chemie Lexikon, Georg Thieme Verlag (9. Auflage), "eine Reihe natürlicher oder künstlich gewonnener Stoffe" bezeichnen, "die in der Regel die folgenden Eigenschaften aufweisen: Bei 20°C knetbar, fest bis brüchig hart, grob bis feinkristallin, durchscheinend bis opak, jedoch nicht glasartig, über 40°C ohne Zersetzung schmelzend,". Chemisch gesehen können Wachse etwa Kohlenwasserstoffe, Alkohole oder Fettsäureester sein. Wachse zeichnen sich auch dadurch aus, daß sie typischerweise einen scharf definierten Schmelzpunkt aufweisen und schon wenig darüber sehr niedrigviskos sind. Wie aus den späteren Ausführungen ersichtlich, können jedoch für die Verwendung in der Erfindung geeignete Wachse oder Wachsgemische auch eine breiten Schmelzbereich aufweisen.

Der Begriff "Schmelzbereich" bezieht sich hier auf einen mittels Differentialthermoanalyse DTA (oder englisch: Differential Scanning Calorimetry DSC) bestimmten Schmelzbereich. Auch ein scharf definierter Schmelzpunkt soll in diesem Zusammenhang unter den Begriff "Schmelzbereich" fallen. Insbesondere sei hier als "Schmelzbereich" derjenige Bereich definiert, innerhalb welchem mindestens 80% der mittels DTA ermittelten Schmelzwärme aufzubringen ist, wobei weitere 10% der aufzubringenden Schmelzwärme bei Temperaturen jeweils oberhalb und unterhalb eines oberen und unteren Grenzwertes für den angegebenen Schmelzbereich aufgebracht werden können. Eine Schmelzbereichsangabe im Kontext dieser Erfindung gibt also einen Bereich an, innerhalb dessen mindestens 80%, weiter bevorzugt 90% der gesamten zum Schmelzen des Wachses aufzubringenden Schmelzwärme aufgebracht werden. Bei einem Schmelzbereich unter 120°C könnten also noch 10% der aufzubringenden Schmelzwärme bei Temperaturen oberhalb 120°C aufzubringen sein.

Bevorzugt liegt der Schmelzbereich des wenigstens einen Wachses unterhalb einer Temperatur von etwa 130°C, besonders bevorzugt unterhalb einer Temperatur von etwa 120°C. In besonders bevorzugten Ausführungsbeispielen liegt der Schmelzbereich des wenigstens einen Wachses im wesentlichen im Bereich von etwa 80°C bis etwa 120°C, noch mehr bevorzugt im Bereich von 90°C bis 115°C.

Besonders bevorzugt ist ein Wachs bzw. Wachsgemisch, welches bei der Pressentemperatur eine Schmelzviskosität von weniger als 75 mPa·s, insbesondere von weniger als 50 mPa·s und noch mehr bevorzugt von weniger als 30 mPa·s aufweist. Zusätzlich oder alternativ dazu weist das mindestens eine Wachs (und entsprechend auch ein Wachsgemisch) bevorzugt eine Schmelzviskosität bei 5°C über der oberen Grenze seines Schmelzbereichs von weniger als 100 mPa·s, und besonders bevorzugt weniger als 50 mPa·s, weiter bevorzugt weniger als 30 mPa·s auf.

Bevorzugt weist das mindestens eine Wachs eine Dichte im Bereich von 0,90 bis 0,99 kg/l, und insbesondere im Bereich von 0,94 bis 0,98 kg/l und am meisten bevorzugt von 0,96 kg/l auf.

Bevorzugt wird das Wachs oder Wachsgemisch in mikronisierter Form eingesetzt. Dabei liegt das im aufzubringenden Gemisch verwendete Wachs (oder Wachsgemisch) als Ausgangsrohstoff bevorzugt derart vor, daß 90% der Wachspartikel eine Größe von unter 30 *µ*m aufweisen und/oder 50% der Wachspartikel eine Größe von unter 10 *µ*m aufweisen (Angaben basierend auf mittels Laserbeugung nach Fraunhofer ermittelten Partikelgrößenverteilungen).

Allgemein sind synthetische Wachse bevorzugt, und insbesondere Polyalkyl enwachse.

Besonders bevorzugt wird beim erfindungsgemäßen Verfahren als Wachs ein Fischer-Tropsch-Wachs verwendet. Bei einem solchen Wachs handelt es sich allgemein um ein niedermolekulares Polyethylen aus einem Kohlevergasungsprozess (Synthesegasverfahren), wobei die molekularen Bestandteile im wesentlichen in geradkettiger Form vorliegen. Der Schmelzbereich eines solchen Wachses liegt im Allgemeinen im Bereich von etwa 80°C bis etwa 115°C, wobei der Schmelzbereich den gesamten genannten Bereich oder nur Teile davon umfassen kann und wobei dieser Bereich je nach Fraktionierungsgrad etwas variieren kann. Die Dichte eines solchen Wachses liegt typischerweise bei etwa 0,94 bis etwa 0,98 kg/l. Fischer-Tropsch-Wachse sind allgemein hart-spröde und weisen eine Schmelzviskosität von kleiner als 50 mPa·s auf, insbesondere von 20 bis 30 mPa·s. Ein bevorzugtes Beispiel für ein solches Fischer-Tropsch-Wachs hat einen Schmelzbereich von 99°C bis 112°C (bestimmt mittels Kofler-Heizbank), ist mikronisiert und weist eine Dichte von 0,96 kg/l und eine Säurezahl von kleiner als 1 mg KOH/g auf. Die Schmelzviskosität dieses bevorzugten Beispiels beträgt dabei 40 mPa·s bei 125°C und 30 mPa·s bei 150°C. Das Molekulargewicht liegt zwischen etwa 800 und 1000 a.u. Besonders bevorzugt sind weiterhin Wachsgemische, bei denen ein Hauptbestandteil durch ein Fischer-Tropsch-Wachs gebildet wird, insbesondere mehr als 80 Gew%.

Es hat sich als vorteilhaft für das Verfahren und die Qualität des resultierenden Dekorlaminats, insbesondere der Schutzschicht des Dekorlaminats, erwiesen, wenn das wenigstens eine Wachs im auf die Dekorschicht aufzubringenden Gemisch in einer Menge von 0,1 bis 5 Gew% des Gemischs, insbesondere in einer Menge von 0,2 bis 3 Gew% oder 0,5 bis 3 Gew% des Gemischs enthalten ist. Entsprechend ist in der Schutzschicht des hergestellten Dekorlaminats Wachs bevorzugt in einer Menge von 0,11 bis 5,5 Gew% des die Schutzschicht bildenden Gemischs vorhanden, wobei diese Angabe sich auf ein Dekorlaminat unmittelbar nach seiner Herstellung, das heißt vor einem Abtrag einer oberen Wachsschicht bezieht.

Für die Verwendung in der vorliegenden Erfindung geeignete Partikel sind solche einer genügenden (Eigen-)Härte, wobei Härte im Sinne der Mohs-Härte zu verstehen sei. Partikel werden im Kontext dieser Erfindung als "hart" bezeichnet, wenn sie eine Mohs-Härte von mindestens 5 aufweisen. Besonders bevorzugt sind solche harten Partikel, die eine Mohs-Härte von 7 oder mehr aufweisen, besonders bevorzugt 8 oder mehr. Beispiele für als harte Partikel geeignete Materialien sind etwa Siliziumdioxid, Siliziumcarbid, Titandioxid sowie Aluminiumoxid. Besonders bevorzugt werden Korund-Partikel als harte Partikel eingesetzt. Weiterhin von Bedeutung sind die Größe der Partikel sowie die Partikelgrößenverteilung, beispielsweise für die Dispergierbarkeit der Partikel in der Kunstharzlösung und damit in Zusammenhang stehende flächenhafte und räumliche Verteilung in der Schutzschicht. Zudem kann die besondere Form der Partikel, das heißt das Vorhandensein von Kanten sowie die Regelmäßigkeit der Oberfläche, einen Einfluß auf die Eigenschaften der Schutzschicht haben. Dieser Einfluß wird jedoch vorteilhaft durch den erfindungsgemäßen Zusatz von Wachs im auf die Dekorschicht aufzubringenden Gemisch und dem daraus resultierenden Vorhandensein von Wachs in der Schutzschicht vermindert. Für die Wahl der Partikel sind neben ihrer Härte auch ihre optische Eigenschaften, insbesondere ihr Brechungsindex, von Relevanz, da durch die Partikeleinbettung in der Schutzschicht deren Transparenz nicht beeinträchtigt werden soll. Daher ist es vorteilhaft, den Brechungsindex der Partikel ähnlich dem Brechungsindex des Kunstharzes bzw. Kunstharzgemischs zu wählen. Auch dürfen die harten Partikel offensichtlich nicht im zur Herstellung der Schutzschicht verwendeten Gemisch löslich sein.

Bevorzugt sind solche Ausführungsformen, in denen mindestens 90% der harten Partikel eine Größe von unter 80 *µ*m aufweisen, weiter bevorzugt eine Größe zwischen 10 und 50 *µ*m oder 60 *µ*m bis 80 *µ*m. Dabei basieren diese Angaben auf mittels Laserbeugung nach Fraunhofer ermittelten Partikelgrößenverteilungen.

Bevorzugt wird eine derartige Menge an harten Partikeln in dem aufzubringenden Gemisch eingesetzt, daß in der Schutzschicht des Dekorlaminats die harten Partikel vorzugsweise in einer Menge von 5 bis 65 Gew%, bezogen auf das Gesamtgewicht des Gemischs der Schutzschicht, weiter bevorzugt 15 bis 50 Gew% vorliegen.

Bei Angaben, die sich beispielsweise als Gewichtsprozent auf das Gesamtgewicht der Schutzschicht beziehen, wird das Gesamtgewicht der Schutzschicht mit einer angenommenen Restfeuchte von etwa 2 Gew% Wasser zugrunde gelegt.

In einer bevorzugten Ausführungsform des Verfahrens zum Herstellen einer Dekorlaminatplatte gemäß dem dritten Vorteil der Erfindung kann die Dekorschicht vor dem Anordnen über dem Trägersubstrat auf mindestens einer Trägerschicht angeordnet werden, wobei die mindestens eine Trägerschicht zwischen Trägersubstrat und Dekorschicht angeordnet wird, und die mindestens eine Trägerschicht zusammen mit dem Trägersubstrat, der Dekorschicht und dem Gemisch verpreßt wird. Diese mindestens eine Trägerschicht wird typischerweise mit einem Gemisch auf Kunstharzbasis getränkt bzw. imprägniert, wobei das Kunstharz (bzw. das Kunstharzgemisch) bevorzugt dem im auf die Dekorschicht aufzubringenden Gemisch enthaltenen Kunstharz (bzw. Kunstharzgemisch) entspricht. Das Trägersubstrat kann beispielsweise eine mitteldichte Faserplatte (MDF), Preßspanplatte oder aber ein Stapel aus (harzgetränkten) Kernbögen, insbesondere Kernpapieren sein, welche durch das Verpressen eine Schichtpreßstoffplatte (high pressure laminate) ausbilden. Weiterhin kann auf einer von der Dekorschicht abgewandten Seite des Trägersubstrats eine sogenannte Gegenzugschicht aufgebracht werden/sein. Weiterhin kann zunächst das Gemisch auf die Dekorschicht aufgebracht werden, eventuell vorgetrocknet oder -gehärtet werden, und anschließend die Dekorschicht mit Gemisch auf der Trägerplatte angeordnet werden oder zunächst die Dekorschicht auf der Trägerplatte angeordnet werden und anschließend das Gemisch aufgebracht werden.

Aufbringen des Gemischs auf die Dekorschicht kann ein vollständiges Tränken der Dekorschicht beinhalten, das heißt Aufbringen des Gemischs auf beide Seiten der Dekorschicht oder aber Aufbringen auf nur eine Seite der Dekorschicht. Weiterhin kann, wenn die Dekorschicht aus einer Dekorbahn und einem Überzugsbogen besteht, das Gemisch nur auf eine Seite des Überzugsbogen, auf beiden Seiten des Überzugsbogen oder aber auf Überzugsbogen und der dem Überzugsbogen zugewandten Seite der Dekorbahn aufgebracht werden. Wird ein Überzugsbogen in der Dekorschicht verwendet, so wird auf diesen zumindest auf der späteren Sicht- bzw. Gebrauchsseite Gemisch mit harten Partikeln aufgebracht.

Der Schmelzbereich des mindestens einen Wachses (das heißt im Falle der Verwendung mehrerer verschiedener Wachse des gesamten Wachsgemischs bzw. jedes der verwendeten Wachse) im auf die Dekorschicht aufzubringenden Gemisch kann des weiteren um mehr als 60°C, insbesondere um mehr als 70°C unterhalb der Pressentemperatur liegen.

Die Pressentemperatur ist bevorzugt im wesentlichen auf eine zum Härten des wenigstens einen Kunstharzes geeignete Aushärtungstemperatur eingestellt, insbesondere ist die Pressentemperatur bevorzugt auf eine zum schnellen Härten des wenigstens einen Kunstharzes geeignete Temperatur eingestellt. Eine Verweilzeit der zu verpressenden Dekorschicht mit aufgebrachtem Gemisch liegt dabei typischerweise im Bereich einiger Sekunden, etwa zwischen 8 bis 20 Sekunden, kann aber auch bis zu einigen Minuten betragen. Bevorzugt ist eine Verweilzeit von 4 bis 10, insbesondere 5 bis 8 Sekunden. Um eine schnelle Härtung des Kunstharzes zu erreichen, wird die Pressentemperatur demgemäß höher eingestellt als eine zum Härten erforderliche Mindesttemperatur, beispielsweise um mindestens etwa 50°C höher. Der Fachmann wählt die Einstellungen von der Heißpresse, wie etwa Pressentemperatur, -druck sowie Verweilzeit bei gegebener Zusammensetzung des Gemischs so, daß das Wachs praktisch vollständig schmilzt, während die Verweilzeit in der Heißpresse noch genügend kurz ist, daß das Kunstharz nicht an der Pressenfläche anhaftet.

Im vorliegenden Verfahren liegt die Pressentemperatur in bevorzugten Ausführungsbeispielen im Bereich zwischen etwa 180°C und etwa 240°C, bevorzugt zwischen etwa 200°C und 225°C insbesondere bei über 210°C. Dies ist besonders vorteilhaft in Verbindung mit einem Kunstharz, dessen Härtung typischerweise Temperaturen von über etwa 170°C erfordert, wie etwa einem Melaminharz. Die zur Härtung des Kunstharzes verwendete Temperatur variiert bei gleichem verwendeten Harz mit Art und Menge von dem Harz zugesetzten Additiven, insbesondere dem zugesetzten Härter. Ein Pressendruck liegt bevorzugt zwischen 2·10⁶ und 4,5·10⁶ Pa (20 und 45 bar, insbesondere bei 3·10⁶ bis 4·10⁶ Pa (30 bis 40 bar).

Die Dekorschicht weist gewöhnlich ein Muster auf, wie zum Beispiel ein Holzmuster oder beliebige Farbmuster.

Bevorzugt umfaßt das Bereitstellen der Dekorschicht ein Bereitstellen einer Dekorbahn. Im einfachsten Fall besteht die Dekorschicht lediglich aus einer unbehandelten Dekorbahn, welche üblicherweise mit einem Muster versehen ist. Des weiteren kann die Dekorbahn vorbehandelt sein, zum Beispiel mit einer Grundierungsschicht imprägniert sein. Die Dekorschicht kann eine Vielzahl von Dicken und Steifheitsgraden, beispielsweise aufrollbare dünne Papierbahnen bis hin zu als Träger geeignete Platten umfassen. Es ist aus dem Stand der Technik beispielsweise bekannt, eine mit einem Muster bedruckte Preßspanplatte zu verwenden, um durch Weglassen einer bedruckten Bahn Kosten zu sparen.

Eine solche Dekorbahn kann beispielsweise eine Papier-, Zellstoff- oder Kunststoffbahn sein, es sind jedoch auch eine Vielzahl geeignete weitere Materialien aus dem Stand der Technik bekannt. Eine Stärke der Dekorbahn und eine Menge und Viskosität des aufzubringenden Gemischs werden typischerweise in Abhängigkeit voneinander und einer einzustellenden Dekorlaminatstärke gewählt. Typisch sind Papierstärken im Bereich von etwa 50 bis 130 g/m². Weiterhin von Bedeutung für die Wahl des Papiers ist dessen Porosität.

In bevorzugten Ausführungsformen umfaßt das Bereitstellen einer Dekorschicht ein Bereitstellen einer Dekorbahn und eines Überzugsbogens. Als Überzugsbögen ("overlays") werden dann bevorzugt sogenannte Overlaypapiere verwendet, welche ein Flächengewicht von etwa 20 bis 50 g/m² aufweisen. Die Überzugsbögen, welche während der Herstellung mit Gemisch und/oder Beschichtungszusammensetzung getränkt werden, werden beim Verpressen üblicherweise durchsichtig, bevorzugt so transparent wie möglich. Im Kontext dieser Erfindung wird aus Gründen der Einfachheit der Überzugsbogen als Teil der Dekorschicht behandelt, diese Zuordnung ist jedoch rein formal und nicht funktionell, denn der Überzugsbogen könnte ebenso gut als Teil oder Grundlage der Schutzschicht angesehen werden.

In bevorzugten Ausführungsformen des erfindungsgemäßen Verfahrens wird das Gemisch ohne einen Zwischenschritt einer zusätzlichen Beschichtung oder sonstigen Vorbehandlung auf eine Dekorbahn aufgebracht. Diese Dekorbahn kann behandelt oder unbehandelt bereitgestellt sein. Eine Behandlung könnte beispielsweise eine die Porosität der Dekorbahn beeinflussende Schicht sein, welche das Eindringen von harten Partikeln in die Poren verhindert. Alternativ wird das Gemisch auf einen über einer (gegebenenfalls bereits imprägnierten) Dekorbahn angeordneten Überzugsbogen aufgebracht. Solche Ausführungsformen sind besonders prozessökonomisch.

In anderen Ausführungsformen des erfindungsgemäßen Verfahrens umfaßt das Bereitstellen der Dekorschicht zusätzlich zum Bereitstellen der Dekorbahn Aufbringen einer Beschichtungszusammensetzung auf die Dekorbahn. Es ist dabei vorteilhaft, wenn das Aufbringen des harte Partikel umfassenden Gemischs auf die Dekorschicht unmittelbar auf das Aufbringen der Beschichtungszusammensetzung auf die Dekorbahn erfolgt, entsprechend einem Naß-in-NaßVerfahren. Dies kann beispielsweise derart erfolgen, daß eine Beschichtungszusammensetzung auf die aus einer Papierbahn bestehende Dekorbahn aufgebracht wird, zum Beispiel durch Tränken der Dekorbahn mit einer Beschichtungszusammensetzung in einem Imprägnierbad, anschließend, falls nötig, überschüssige Beschichtungszusammensetzung entfernt wird und unmittelbar daran anschließend das mindestens Partikel und Wachs enthaltende Gemisch auf Kunstharzbasis auf die mit Beschichtungszusammensetzung getränkte Dekorbahn, das heisst die Dekorschicht, aufgebracht und anschließend Dekorschicht und Gemisch unter Hitzeeinwirkung zu einem Laminat verpreßt werden, üblicherweise nach einem dem Verpressen vorgeschalteten Trocknungsschritt.

In alternativen Ausführungsformen kann die mit einer Beschichtungszusammensetzung imprägnierte Dekorbahn auch vorgetrocknet werden, bevor das Gemisch auf die aus Dekorbahn und (getrockneter) Beschichtungszusammensetzung bestehende Dekorschicht aufgebracht wird.

Entsprechend kann in anderen Ausführungsformen auf Dekorbahn und Überzugsbogen in analoger Weise zunächst Beschichtungszusammensetzung aufgebracht werden, und anschließend das harte Partikel umfassende Gemisch auf den über der Dekorbahn angeordneten Überzugsbogen aufgebracht werden.

Es sind Ausführungsformen bevorzugt, bei denen die Beschichtungszusammensetzung zumindest das wenigstens eine Kunstharz, jedoch keine harten Partikel umfaßt. Besonders bevorzugt sind dabei solche Ausführungsformen, in denen die Beschichtungszusammensetzung im wesentlichen der Zusammensetzung des auf die Dekorschicht aufzubringenden Gemischs entspricht, jedoch frei von harten Partikeln bzw. Zusatz harter Partikel ist. Ausführungsformen, in welchen zunächst eine Beschichtungszusammensetzung auf die Dekorbahn bzw. den Überzugsbogen aufgebracht wird, gewährleisten ebenfalls einen guten Verbund von Dekorschicht und Schutzschicht miteinander. Es ist praktisch keine Grenzfläche zwischen diesen beiden Schichten auszumachen. Außerdem helfen solche Ausführungsformen zu verhindern, daß Partikel in der Dekorbahn bzw. dem Überzugsbogen vorhanden sind, was zum einen Partikel und damit Kosten spart, zum anderen einen besseren optischen Eindruck vom Muster erzielen kann.

Entsprechend umfaßt in bevorzugten Ausführungsformen des erfindungsgemäßen Dekorlaminats die Dekorschicht eine Dekorbahn und/oder Überzugsbogen, welche(r) mit einer Beschichtung versehen bzw. fest verbunden ist. Besonders bevorzugt ist diese Beschichtung praktisch frei von harten Partikeln. In Analogie zu den obigen, das erfindungsgemäße Verfahren betreffenden Ausführungen entspricht eine Zusammensetzung der Beschichtung der Dekorbahn und/oder des Überzugsbogens mit Ausnahme der harten Partikel bevorzugt im wesentlichen einer Zusammensetzung der Schutzschicht auf der Dekorschicht.

Das Verpressen der Dekorschichten mit aufgebrachtem Gemisch kann so eingestellt werden, daß die Dekorlaminate praktisch ganz oder nur teilweise gehärtet werden. Bei teilgehärteten Dekorlaminaten können diese in einem extra Arbeitsgang auf ein Trägersubstrat, eventuell mit zusätzlichen, dazwischen gelegten Trägerschichten, aufgebracht werden und miteinander verpreßt werden. Alternativ kann das Dekorlaminat ganz gehärtet werden und anschließend auf ein Trägersubstrat, eventuell mit zwischengelegten Trägerschichten, aufgebracht werden. In weiteren Ausführungsformen wird die Dekorschicht mit aufgebrachtem Gemisch vor dem Verpressen auf eine oder mehrere Trägerbahn(en) und/oder ein Trägersubstrat aufgebracht.

Das auf die Dekorschicht aufzubringende Gemisch kann ferner Additive umfassen. Solche Additive sind in diesem Fachgebiet üblich und wohlbekannt und umfassen etwa Netzmittel und/oder Härter und/oder Modifikator(en) und/oder Katalysator(en) und/oder Beschleuniger und/oder Trennmittel. Als Beschleuniger werden beispielsweise Vinylpyrrolidone verwendet, besonders bevorzugt 1-Vinylpyrrolidon-Homopolymere. Ebenfalls bevorzugt ist der Zusatz eines oder mehrerer Silane. Der Begriff "Silane" steht hier für Alkoxysilane, insbesondere Ethylendiamin-Alkoxysilane, als Adhäsionsverbesserer. Welche Additive und in welcher Menge diese verwendet werden, hängt von der Zusammensetzung des Gemischs und den Eigenschaften des Lösungsmittels bzw. Dispersionsmittels, des Kunstharzes und weiteren Faktoren ab, die dem auf diesem Gebiet tätigen Fachmann wohlbekannt sind. Je nachdem, ob diese Additive im Zuge des Verpressens und insbesondere des Härtens verbraucht oder verändert werden oder sich verflüchtigen, liegen diese in gleicher oder veränderter Form noch entsprechend in dem hergestellten Dekorlaminat bzw. der Schutzschicht vor. Zudem ist es denkbar, dem Gemisch Pigmente zuzusetzen.

Als besonders vorteilhaft hat sich die Erfindung erwiesen, wenn das hitzehärtbare Kunstharz ein Melaminharz oder ein Melaminharzgemisch ist. Das Kunstharz wird im auf die Dekorschicht aufzubringenden Gemisch bevorzugt in Form einer wäßrigen Suspension bereitgestellt. Neben Melaminharzen (Melamin-Formaldehyd-Harzen) können auch andere Aminoplaste, wie zum Beispiel Harnstoff-Formaldehyd-Harze eingesetzt werden. Des weiteren können die eingesetzten Kunstharze, insbesondere Melaminharze, auch mit anderen Harzen, wie etwa Acrylharzen und Polyesterharzen modifiziert sein. Weitere Beispiele für geeignete Kunstharze sind aus dem Stand der Technik bekannt. Das Kunstharz kann beispielsweise zumindest teilweise in Form vorgehärteter Teilchen eingesetzt werden. Es ist weiterhin nicht ausgeschlossen, daß in einigen Ausführungsformen Kunstharze verwendet werden, die nicht oder nicht ausschließlich hitzehärtbar sind.

Das aufzubringende Gemisch wird gewöhnlich in flüssiger Form, insbesondere in Form einer Suspension, eingesetzt. Als bevorzugtes Lösungs- bzw. Dispersionsmittel wird Wasser verwendet.

Das Aufbringen des flüssigen Gemischs auf die Dekorschicht kann auf verschiedene Weisen erfolgen. Das Gemisch kann etwa durch eine Beaufschlagungswalze auf die Dekorschicht aufgebracht werden. Dabei taucht eine Walze in ein das Gemisch enthaltende Imprägnierbad ein, nimmt eine Menge des Gemischs auf und transferiert das Gemisch auf eine Seite der Dekorschicht, welche über einen anderen Teil der Beaufschlagungswalze geführt wird. Alternativ kann das Gemisch auch mittels eines Drahtrakels aufgetragen werden. Drahtstärken, die typischerweise in solchen Drahtrakeln beim erfindungsgemäßen Verfahren zum Einsatz kommen, liegen bei etwa 0,8 bis 2 mm. Drahtrakeln bieten den Vorteil, daß sich eine Menge des aufzubringenden Gemischs durch geeignete Wahl von Parametern wie etwa Drehzahl und Anzahl der Drähte sehr gut steuern läßt. Weiterhin besteht die Möglichkeit, die Dekorschicht praktisch ganz eintauchend durch ein das aufzubringende Gemisch enthaltendes Imprägnierbad zu führen. Welche der angegebenen Möglichkeiten verwendet wird, hängt von der Menge des aufzutragenden Gemischs, sowie von dessen Viskosität, etwaigen Trocknungs- und weiteren Beschichtungsschritten und anderen Faktoren ab.

Bevorzugt wird das Gemisch in einer Menge von etwa 180 bis 210 Gew%, bezogen auf das Gewicht der Dekorschicht (welches als 100% angenommen wird), auf die Dekorschicht aufgebracht. Erfindungsgemäße Schutzschichten haben in bevorzugten Ausführungsformen beispielsweise eine Dicke im Bereich von etwa 0,02 bis 0,15 mm.

Vor dem Schritt des Verpressens können ein oder mehrere Trocknungsschritte durchgeführt werden. Hierbei wird auf die Dekorschicht zunächst das Gemisch aus hitzehärtbarem Kunstharz und den harten Partikeln und ggf. dem Wachs sowie weiterer Zusatzstoffe aufgebracht. Das Wachs kann allerdings auch gesondert, bevorzugt in fein verteilter, fester Form aufgebracht werden. Dann wird die mit dem Gemisch beaufschlagte Dekorschicht in einem Konvektionstrockner innerhalb von etwa 1 bis 3 Minuten getrocknet, wobei ein Trockentemperaturprofil durchfahren wird, das eine anfangs ansteigende, zum Ende hin abfallende Trocknungstemperatur bereitstellt. Es ist bevorzugt, wenn die Trocknungstemperatur hoch genug ist, um das Wachs zum Schmelzen zu bringen, beispielsweise 140 bis 190 °C. Nach dem Trocknen kann die beschichtete Dekorschicht als Dekor-Prepreg in Bögen geschnitten, gestapelt und bis zur Weiterverarbeitung trocken klimatisiert gelagert werden. In diesen Prepregbögen ist das Wachs in der Oberfläche angereichert, um im nachfolgenden Preßvorgang seine Schutzwirkung entfalten zu können.

Die Dekorlaminate bzw. Dekorl aminatplatten gemäß der vorliegenden Erfindung sind für eine Vielzahl von Anwendungsbereichen geeignet, beispielsweise als Fußbodenbelag, Tischplatte, Arbeitsplatte und Wandpaneele.

In der erfindungsgemäßen Dekorlaminatplatte weist in bevorzugten Ausführungsformen wenigstens eine Stirnseite der Dekorlaminatplatte ein Nut-und-Feder-Profil auf.

Im Folgenden wird die Erfindung anhand eines bevorzugten Ausführungsbeispiels unter Bezug auf die Figuren näher erläutert, wobei
- Figur 1: eine mittels DTA ermittelte Schmelzkurve eines zur Verwendung in der Erfindung geeigneten Fischer-Tropsch-Wachses darstellt,
- Figur 2: ein Ausführungsbeispiel des erfindungsgemäßen Verfahrens schematisch darstellendes Fließdiagramm und

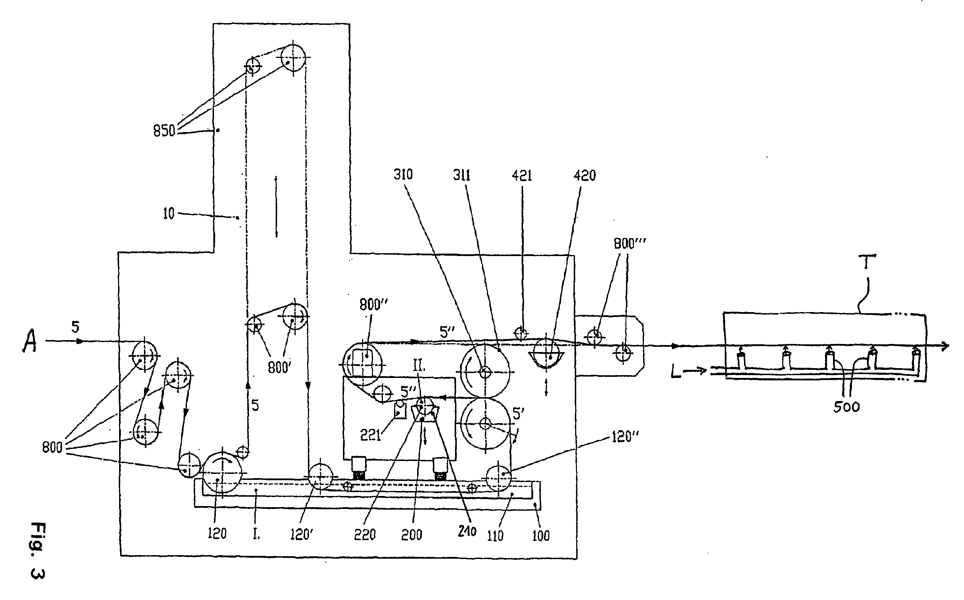

- Figur 3: ein Beispiel für eine für das erfindungsgemäße Verfahren geeignete Beschichtungsanlage zeigt.

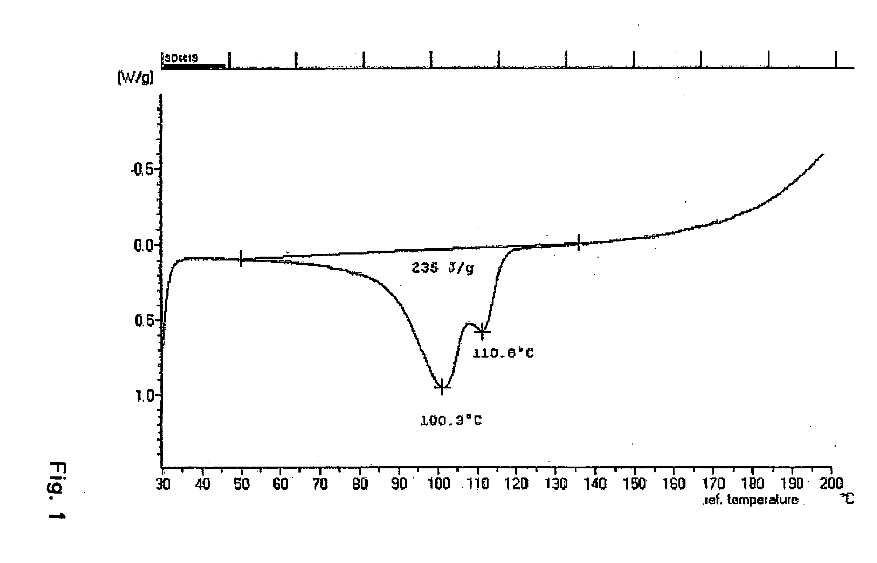

Im nachfolgend beschriebenen Ausführungsbeispiel wird als Wachs für das aufzubringende Gemisch ein Fischer-Tropsch-Wachs (im folgenden als FT-Wachs bezeichnet) verwendet. Das mittels DTA (Differentialthermoanalyse) ermittelte Schmelzdiagramm des eingesetzten Fischer-Tropsch-Wachses ist in Figur 1 dargestellt. Das Diagramm wurde mit einer FP 85 DTA/DSC-Messzelle eines Mettler FP 900-Thermosystems aufgenommen. Dabei wurde zur Analyse des Fischer-Tropsch-Wachses folgendes Temperaturprogramm zugrunde gelegt:
- Schritt 1:: Erhitzung von 30°C auf 200°C bei einer Heizrate von 5°C/min
- Schritt 2:: Abkühlung von 200°C auf 30°C bei einer Kühlrate von 20°C/min
- Schritt 3:: Erhitzung von 30°C auf 200°C bei einer Heizrate von 5°C/min

Das in Figur 1 dargestellten Schmelzdiagramm wurde während Schritt 3 aufgenommen. Die angegebene Temperatur entspricht der eingestellten Temperatur, und daher nicht notwendigerweise der Temperatur der mittels DTA untersuchten Probe.

Wie aus Figur 1 ersichtlich, liegt der Schmelzbereich im wesentlichen zwischen 80°C und 115°C, wobei ein Maximum bei etwa 100°C und ein weiteres Maximum bei etwa 110°C liegt.

Außer durch die Schmelzkurve ist das eingesetzte FT-Wachs durch die folgenden Parameter charakterisiert: 50% der Wachs-Teilchen sind kleiner als 9*µ*m, 90% der Teilchen sind kleiner als 22*µ*m. Die Dichte beträgt 0,96 g/cm³ und die Säurezahl ist kleiner als 1 mg KOH/g. Die Schmelzviskosität dieses Wachses beträgt 40 mPa·s bei 125°C und 30 mPa·s bei 150°C. Diese Schmelzviskositäten wurden mittels eine ICI-Viskosimeters ermittelt.

Im Ausführungsbeispiel für das erfindungsgemäße Verfahren wird ein Gemisch folgender Zusammensetzung verwendet:

**Tabelle 1**

| | Gew.% | Gewicht [kg] |
|---|---|---|
| Melaminharz-Dispersion, ca. 60% | 54,40 | 176,80 |
| Trennmittel (ALTON 856, WIZ Chemicals, IT) | 0,03 | 0,10 |
| Netzmittel ALTON 883, WIZ Chemicals, IT) | 0,25 | 0,81 |
| Härter (ALTON HM 720, WIZ Chemicals, IT) | 0,15 | 0,49 |
| Wasser | 3,87 | 12,58 |
| Beschleuniger (Luvicross, BASF, DE) | 2,60 | 8,45 |
| Silan (Dow Corning Z6020) | 0,80 | 2,60 |
| FT-Wachs | 0,60 | 1,95 |
| Korund | 37,00 | 120,25 |
| Essigsäure, konz. | 0,30 | 0,98 |
| | 100,00 | 325,00 |

Aus den in Tabelle 1 genannten Komponenten wird unter intensiver Durchmischung das auf die Dekorschicht aufzubringende Gemisch hergestellt. Als Melaminharz-Dispersion wird eine handelsübliche Dispersion mit etwa 60% Feststoffanteil (Harz) verwendet. Als Beschleuniger (Modifikator) wird ein mikronisiertes 1-Vinylpyrrolidon-Homopolymer eingesetzt. Die eingesetzten Korundpartikel liegen im Größenbereich von 10 bis 90 *µ*m, insbesondere 60 bis 80 *µ*m oder 10 bis 50 *µ*m. Zusätzlich kann eine Verdicker-Lösung auf der Basis von Johannisbrotmehl zugesetzt werden. Das FT-Wachs kann unter der Produktbezeichnung PORO 100 von der Firma Pointner & Rothschädl Ges.m.b.H., Salzburg, Österreich bezogen werden.

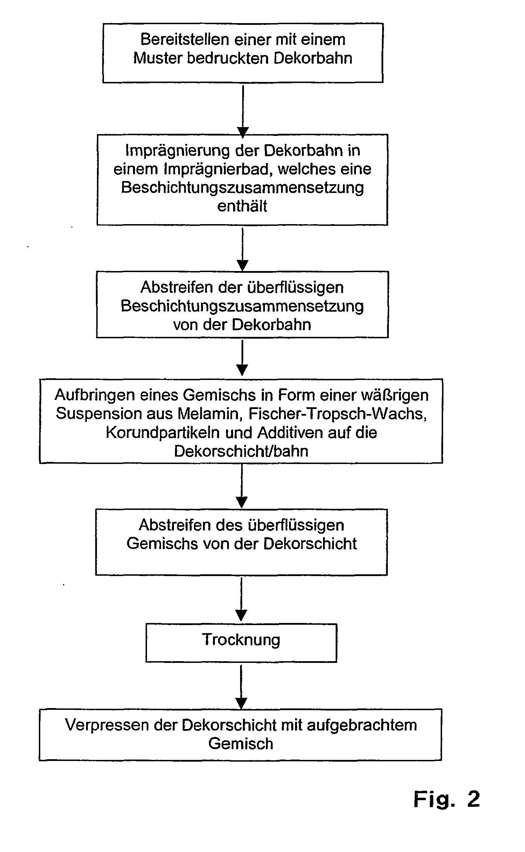

Ein Schema des beschriebenen Ausführungsbeispiels des erfindungsgemäßen Verfahrens ist in Figur 2 dargestellt.

Zum Bereitstellen einer mit einem Muster bedruckten Dekorbahn wird von einer Rolle eine mit einem Holzmuster bedruckte Dekorbahn, in der Regel über mehrere Walzen, einer Verarbeitungsstation zugeführt. Als Dekorbahn wird hier eine Papierbahn mit einer Grammatur von 80 g/m² verwendet.

In der Verarbeitungsstation wird die Dekorbahn zunächst mit Hilfe einer Beaufschlagungswalze einer Beschichtungszusammensetzung imprägniert. Die Beschichtungszusammensetzung hat in diesem Ausführungsbeispiel die gleiche Zusammensetzung wie das Gemisch (Tabelle 1), ist jedoch praktisch frei von harten Partikeln. In einem weiteren Schritt wird überflüssige Beschichtungszusammensetzung durch Abstreifen von der Dekorbahn entfernt. Dekorbahn und Beschichtungszusammensetzung bilden zusammen die Dekorschicht.

In einem weiteren Schritt wird das in Tabelle 1 angegebene Gemisch in Form einer wäßrigen Suspension auf die Dekorschicht aufgebracht, beispielsweise mittels eines Drahtrakels. Dabei beträgt die Auftragsmenge im vorliegenden Ausführungsbeispiel etwa 200Gew%, bezogen auf das Gewicht der Dekorschicht. Anschließend wird überflüssiges Gemisch durch Abstreifen von der Dekorschicht entfernt.

Nach Aufbringen des Gemischs auf die Dekorschicht erfolgt ein Trocknungsschritt, etwa in einem Konvektionstrockentunnel bei ansteigenden Temperaturen zwischen 140°C bis 190°C. Im dargestellten Beispiel wird ein 60m langer Trockner eingesetzt, wobei die Vorschubgeschwindigkeit je nach Papiersorte 20 m/min bis 60 m/min beträgt. Das Trocknungsgut wird durch Heißluft aus Zuluftdüsen getragen und dabei geheizt. Im Verlauf des Trocknens schmilzt das feinverteilte Wachs auf und reichert sich in der Oberfläche der Beschichtung an. Die zurechtgeschnittenen Dekor-Prepregbögen werden in Folie eingeschlagen, gestapelt und klimatisiert gelagert. Die Stapelbarkeit wird durch vor dem Trocknen zugesetztes oder nach dem Trocknen aufgesprühtes Trenn- oder Antiblockmittel verbessert. Zur Weiterverarbeitung werden die Dekor-Prepregbögen in einer Niederdruckpresse einzeln zu einem Dekorlaminat verpreßt, wobei die Pressentemperatur etwa 200°C bis 225°C, der Pressendruck etwa 4.10⁶Pa (40 bar) und die Verweilzeit in der Presse etwa 5 bis 10 s beträgt.

Ein Beispiel für eine zur Verwendung im obig beschriebenen Ausführungsbeispiel geeignete Beschichtungsanlage wird nachfolgend beschrieben:
Von einer nicht gezeigten Dekorpapier-Rolle wird über einen Abwickler A die zu imprägnierende und verschleißfest zu beschichtende Dekorpapierbahn 5 über mehrere Führungswalzen 800 der Imprägnier- und Beschichtungsanlage 10 geführt und gelangt zur größeren ersten Beaufschlagungswalze 120, welche unterseitig in das der länglichen Imprägnierwanne 100 kontinuierlich zugeführte Imprägniergemisch 110 eintaucht, eine Schicht des Imprägniergemischs bei ihrer Drehung mitnimmt und auf die Papierbahn 5 unterseitig aufträgt, so daß eine erste Befeuchtung derselben stattfindet. Die Bahn wird dann zur Konditionierung unter Anwendung leichter Zugkraft über Walzen 800' geführt. Dann gelangt die Bahn über die erste Badwalze 120' voll unter die Oberfläche der Harzmischung 110 in der Wanne 100, verbleibt für eine Strecke, welche einer Imprägnierzeit von 2 bis 8 s entspricht, im Harzbad und wird als imprägnierte, nasse Dekorbahn über die Walze 120" aus dem Bad 110 geführt. Sie wird nach Passieren eines Dosierwalzenpaares 310 mit Abstreifer 311 über die in die Abrasivteilchen und das feinverteilte Wachs enthaltende Auftragsharzmasse 210 in der Wanne 200 eintauchende, rotierende Auftragswalze 220 geführt, wo sie sicht- bzw. druckseitig mit der Verschleißharzmasse 210 beaufschlagt wird. Eine Feinverteilung erfolgt durch das Drahtrakel 221 quer über die Bahnbreite. Über eine Umlenkwalze 800" und ein Drahtrakel 421 sowie eine höhenverstellbare Abstreifwalze mit Rakel 420 und weitere Walzen 800'" verläßt die nun auch mit der Verschleißbeschichtung versehene Dekorbahn 5" die Anlage und wird in den Trockner T geführt und dort auf die gewünschte Restfeuchte getrocknet. Der Trockner T wird seinerseits mit Heißluft L gespeist, die aus Düsen 500 im Trockner austritt und dadurch die Bahn trägt.

## Patentansprüche

1. Verfahren zur Herstellung eines Dekor-Prepregbogens, umfassend:
Bereitstellen einer Dekorschicht,
Aufbringen eines Gemisches, welches ein hitzehärtbares Kunstharz und harte Partikel umfasst, auf die Dekorschicht,
Aufbringen eines Wachses oder Wachsgemisches, dessen Schmelzbereich unterhalb einer Temperatur von etwa 140°C liegt, auf die Dekorschicht oder auf das Gemisch, und
Trocknen des aufgebrachten Gemischs,
**dadurch gekennzeichnet, dass**
das Trocknen bei einer Trockentemperatur oberhalb des Schmelzbereichs des Wachses durchgeführt wird.

2. Verfahren nach Anspruch 1, ferner umfassend Verpressen der Dekorschicht, des Gemisches und des Wachses in einer Heißpresse zu einem Laminat.

3. Verfahren nach Anspruch 2, wobei die Heißpresse beim Verpressen der Dekorschicht, des Gemisches und des Wachses zu einem Laminat eine Pressentemperatur als Solltemperatur aufweist.

4. Verfahren nach Anspruch 3, wobei der Schmelzbereich des Wachses um mehr als etwa 50°C unterhalb der Pressentemperatur liegt.

5. Verfahren nach Anspruch 4, wobei der Schmelzbereich um mehr als 60°C unterhalb der Pressentemperatur liegt.

6. Verfahren nach Anspruch 5, wobei der Schmelzbereich um mehr als 70°C unterhalb der Pressentemperatur liegt.

7. Verfahren nach einem der Ansprüche 2 bis 6, wobei eine Verweilzeit in der Presse 4 bis 60 sec. beträgt.

8. Verfahren nach Anspruch 7, wobei die Verweilzeit 5 bis 20 sec., bevorzugt 5 bis 8 sec. beträgt.

9. Verfahren nach einem der Ansprüche 2 bis 8, wobei ein Preßdruck weniger als 5·10⁶ Pa (50 bar), bevorzugt zwischen 2·10⁶ und 4,5·10⁶ Pa (20 und 45 bar), besonders bevorzugt 3·10⁶ bis 4·10⁶ Pa (30 bis 40 bar) beträgt.

10. Verfahren nach einem der Ansprüche 2 bis 9, wobei die Pressentemperatur im Bereich zwischen etwa 180°C und etwa 240°C liegt.

11. Verfahren nach einem der Ansprüche 2 bis 10, wobei die Pressentemperatur zwischen etwa 200°C und 225°C, bevorzugt etwa 210°C beträgt.

12. Verfahren nach einem der Ansprüche 2 bis 11, wobei das wenigstens eine Wachs bei der Pressentemperatur eine Schmelzviskosität von weniger als 75 mPa·s, insbesondere von weniger als 50 mPa·s, bevorzugt von weniger als 30 mPa·s aufweist.

13. Verfahren nach einem der Ansprüche 2 bis 12, ferner umfassend Trocknen der Dekorschicht mit dem aufgebrachten Gemisch vor dem Verpressen, und zwar bei einer Trockentemperatur in einem Trocknungstemperaturbereich unterhalb der Pressentemperatur.

14. Verfahren nach Anspruch 13, wobei das Trocknen bis zu einer Restfeuchte von höchstens 7%, insbesondere wenigstens 6% erfolgt.

15. Verfahren nach Anspruch 13 oder 14, wobei der Schmelzbereich des Wachses unterhalb der Trockentemperatur liegt.

16. Verfahren nach einem der Ansprüche 13 bis 15, wobei der Schmelzbereich des Wachses innerhalb des Trocknungstemperaturbereichs liegt.

17. Verfahren nach einem der Ansprüche 13 bis 16, wobei der Trocknungstemperaturbereich 140 bis 190° C beträgt.

18. Verfahren nach Anspruch 17, wobei im Verlauf des Trocknens die Trockentemperatur zunächst einen ansteigenden Verlauf aufweist und insbesondere danach einen abfallenden Verlauf aufweist.

19. Verfahren nach einem der Ansprüche 13 bis 18, wobei eine Trocknungsdauer 1 bis 3 Minuten, bevorzugt etwa 1,5 bis 2 Minuten beträgt.

20. Verfahren nach einem der Ansprüche 1 bis 19, wobei das Aufbringen des Wachses gemeinsam mit dem Aufbringen des Gemisches erfolgt.

21. Verfahren nach Anspruch 20, wobei das Wachs ein Bestandteil des Gemisches ist.

22. Verfahren nach einem der Ansprüche 1 bis 21, wobei der Schmelzbereich des Wachses oberhalb 60° C, bevorzugt oberhalb 80° C liegt.

23. Verfahren nach einem der vorangehenden Ansprüche, wobei mindestens 90% der harten Partikel eine Größe von unter 80 *µ*m aufweisen.

24. Verfahren nach einem der vorangehenden Ansprüche, wobei das hitzehärtbare Kunstharz ein Melaminharz ist.

25. Verfahren nach einem der vorangehenden Ansprüche, wobei die harten Partikel Aluminiumoxidpartikel, insbesondere Korundpartikel sind.

26. Verfahren nach einem der vorangehenden Ansprüche, wobei das Wachs ein Fischer-Tropsch-Wachs ist.

27. Verfahren nach einem der vorangehenden Ansprüche, wobei das wenigstens eine Wachs in einer Menge von 0,1 bis 5 Gew% des Gemischs im Gemisch enthalten ist, vorzugsweise in einer Menge von 0,2 bis 3 Gew%, besonders bevorzugt in einer Menge von 0,25 bis 1,5 Gew%.

28. Dekor-Prepregbogen, erhältlich nach dem Verfahren gemäß Anspruch 1, der Dekor-Prepregbogen umfassend:
eine Dekorschicht, und
ein auf die Dekorschicht aufgebrachtes Gemisch aus wenigstens einem hitzehärtbaren Kunstharz, harten Partikeln und wenigstens einem Wachs, dessen Schmelzbereich unterhalb einer Temperatur von etwa 140°C liegt.

29. Dekorlaminat, umfassend:
eine Dekorschicht, und
eine mit der Dekorschicht fest verbundene Schutzschicht aus einem Gemisch aus wenigstens einem hitzegehärteten Kunstharz, harten Partikeln und wenigstens einem Wachs, dessen Schmelzbereich unterhalb einer Temperatur von etwa 140°C liegt, wobei das Dekorlaminat durch Verpressen des Dekor-Prepregbogens gemäß Anspruch 28 in einer Heißpresse erhältlich ist.

30. Dekorlaminat nach Anspruch 29, wobei das mindestens eine Wachs ein Fischer-Tropsch-Wachs ist.

31. Dekorlaminat nach Anspruch 29 oder 30, wobei die harten Partikel Aluminiumoxidpartikel sind.

32. Dekorlaminat nach einem der Ansprüche 29 bis 31, wobei mindestens 90% der harten Partikel eine Größe von unter 80 *µ*m aufweisen.

33. Dekorlaminat nach einem der Ansprüche 29 bis 32, wobei die harten Partikel in dem Gemisch in einer Menge von 5 bis 65 Gew% vorliegen.

34. Dekorlaminat nach einem der Ansprüche 29 bis 33, wobei das hitzegehärtete Kunstharz ein Melaminharz oder ein Gemisch von Melaminharzen ist.

35. Dekorlaminat nach einem der Ansprüche 29 bis 34, wobei das Wachs in der Laminatoberfläche angereichert ist.

36. Dekorlaminat nach Anspruch 35, wobei eine Wachskonzentration in der Schutzschicht einen negativen Gradienten in Tiefenrichtung aufweist.

37. Dekorlaminat nach einem der Ansprüche 29 bis 36, wobei das Wachs in der Laminatoberfläche von allen Bestandteilen den massemäßig größten Anteil hat, insbesondere mehr als die Hälfte ausmacht.

38. Dekorlaminat nach einem der Ansprüche 29 bis 37, wobei eine mittlere Schutzschichtdicke 20 bis 30 *µ*m beträgt.

39. Dekorlaminatplatte, umfassend ein Trägersubstrat, auf welchem das Dekorlaminat nach einem der Ansprüche 29 bis 38 flächig aufgebracht ist.

40. Verwendung der Dekorlaminatplatte nach Anspruch 39 als Bodenbelag.

## Claims

1. A method for producing a decorative pre-impregnated sheet, comprising:
providing a decorative layer,
applying a mixture comprising a thermohardening synthetic resin and hard particles to the decorative layer,
applying a wax or a mixture of waxes, having a melting range below a temperature of about 140°C, to the decorative layer or to the mixture, and
drying the applied mixture,
**characterized in that**
drying is carried out at a temperature above the melting range of the wax.

2. The method according to claim 1, further comprising pressing the decorative layer, the mixture and the wax in a hot press to form a laminate.

3. The method according to claim 2, wherein the hot press, when pressing the decorative layer, the mixture and the wax to form a laminate, has a press temperature as target temperature.

4. The method according to claim 3, wherein the melting range of the wax is by more than about 50°C below the press temperature.

5. The method according to claim 4, wherein the melting range is by more than 60°C lower than the press temperature.

6. The method according to claim 5, wherein the melting range is by more than 70°C lower than the press temperature.

7. The method according to one of claims 2 to 6, wherein a dwell time in the press is from 4 to 60 sec.

8. The method according to one of claims 7, wherein the dwell time is from 4 to 20 sec., preferably 5 to 8 sec.

9. The method according to one of claims 2 to 8, wherein a pressure of the press is less than 5·10⁶ Pa (50 bar), preferably between 2.10⁶ and 4.5·10⁶ Pa (20 and 45 bar), and particularly preferred between 3·10⁶ and 4·10⁶ Pa (30 and 40 bar).

10. The method according to one of claims 2 to 9, wherein the press temperature is in the range between about 180°C and about 240°C.

11. The method according to one of claims 2 to 10, wherein the press temperature is in the range between about 200°C and about 225°C, preferably about 210°C.

12. The method according to one of claims 2 to 11, wherein the at least one wax has a melt viscosity of less than 75 mPa·s, in particular less than 50 mPa·s, preferably less than 30 mPa·s, at the press temperature.

13. The method according to one of claims 2 to 12, further comprising drying the decorative layer with the applied mixture before the pressing, and at a drying temperature within a drying temperature range below the press temperature.

14. The method according to claim 13, wherein the drying is carried out until a residual water content is 7 % at most, in particular at least 6 %.

15. The method according to claim 13 or 14, wherein the melting range of the wax is below the drying temperature.

16. The method according to one of claims 13 to 15, wherein the melting range of the wax is within the drying temperature range.

17. The method according to one of claims 13 to 16, wherein the drying temperature range is 140°C to 190°C.

18. The method according to claim 17, wherein during the drying, the drying temperature initially has an increasing temperature profile and in particular thereafter a decreasing temperature profile.

19. The method according to one of claims 13 to 18, wherein a drying time is from 1 to 3 minutes, preferably about 1.5 to 2 minutes.

20. The method according to one of claims 1 to 19, wherein the application of the wax is carried out together with the application of the mixture.

21. The method according to claim 20, wherein the wax is a component of the mixture.

22. The method according to one of claims 1 to 21, wherein the melting range of the wax is above 60°C, preferably above 80°C.

23. The method according to one of the preceding claims, wherein at least 90 % of the hard particles have a size below 80 µm.

24. The method according to one of the preceding claims, wherein the thermohardening synthetic resin is a melamine resin.

25. The method according to one of the preceding claims, wherein the hard particles are aluminium oxide particles, in particular corundum particles.

26. The method according to one of the preceding claims, wherein the wax is a Fisher-Tropsch-Wax.

27. The method according to one of the preceding claims, wherein the at least one wax is comprised in the mixture in an amount of from 0.1 to 5 weight percent of the mixture, preferably in an amount of from 0.2 to 3 weight percent, and particularly preferred in an amount of from 0.25 to 1.5 weight percent.

28. A decorative, pre-impregnated sheet, obtainable according to the method of claim 1, said decorative pre-impregnated sheet comprising:
a decorative layer, and
a mixture applied to the decorative layer, the mixture comprising at least one thermohardening synthetic resin, hard particles, and at least one wax whose melting range is below a temperature of about 140°C.

29. A decorative laminate, comprising:
a decorative layer, and
a protective layer fixedly attached to the decorative layer, the protective layer comprising a mixture of at least one thermohardened synthetic resin, hard particles and at least one wax, wherein a melting range of the wax is below a temperature of about 140°C, said decorative laminate being obtainable by pressing the decorative, pre-impregnated according to claim 28.

30. The decorative laminate according to claim 29, wherein the at least one wax is a Fischer-Tropsch-Wax.

31. The decorative laminate according to claim 29 or 30, wherein the hard particles are aluminium oxide particles.

32. The decorative laminate according to one of claims 29 to 31, wherein at least 90 % of the hard particles have a size of less than 80 µm.

33. The decorative laminate according to one of claims 29 to 32, wherein the hard particles are present in the mixture in an amount of from 5 to 65 weight percent.

34. The decorative laminate according to one of claims 29 to 33, wherein the thermohardened synthetic resin is a melamine resin or a mixture of melamine resins.

35. The decorative laminate according to one of claims 29 to 34, wherein the wax is accumulated on a surface of the laminate.

36. The decorative laminate according to claim 35, wherein a concentration of the wax in the protective layer has a negative gradient in a depth direction of the layer.

37. The decorative laminate according to one of claims 29 to 36, wherein out of all components, the wax accounts for the major part of the mass in the laminate surface, in particular accounts for more than half of the mass.

38. The decorative laminate according to one of claims 29 to 37, wherein an average thickness of the protective layer is between 20 and 30 µm.

39. A decorative laminate board, comprising a support substrate on the surface of which the decorative laminate according to one of claims 29 to 38 is applied.

40. Use of the decorative laminate board according to claim 39 as flooring.

## Revendications

1. Procédé de fabrication d'une feuille décorative pré-imprégnée, comprenant :
la mise à disposition d'une couche décorative
l'application d'un mélange qui comprend une résine synthétique thermodurcissable et des particules dures, sur la couche décorative,
l'application d'une cire ou d'un mélange de cires dont l'intervalle de fusion se situe en dessous d'une température d'environ 140° C sur la couche décorative ou sur le mélange, et
le séchage du mélange appliqué,
**caractérisé en ce que**
le séchage est réalisé à une température de séchage supérieure à l'intervalle de fusion de la cire.

2. Procédé selon la revendication 1, comprenant en outre la compression en un stratifié de la couche décorative, du mélange et de la cire dans une presse à chaud.

3. Procédé selon la revendication 2, dans lequel la presse à chaud présente lors de la compression en un stratifié de la couche décorative, du mélange et de la cire, une température de compression en tant que température théorique.

4. Procédé selon la revendication 3, dans lequel l'intervalle de fusion de la cire est inférieur de plus d'environ 50° C à la température de compression.

5. Procédé selon la revendication 4, dans lequel l'intervalle de fusion est inférieur de plus de 60° C à la température de compression.

6. Procédé selon la revendication 5, dans lequel l'intervalle de fusion est inférieur de plus de 70° C à la température de compression.

7. Procédé selon l'une des revendications 2 à 6, dans lequel une durée de séjour dans la presse est de 4 à 60 sec.

8. Procédé selon la revendication 7, dans lequel la durée de séjour est de 5 à 20 sec., de préférence de 5 à 8 sec.

9. Procédé selon l'une des revendications 2 à 8, dans lequel une pression de moulage est inférieure 5.10⁶ Pa (50 bars), de préférence, entre 2.10⁶ et 4,5.10⁶ Pa (20 et 45 bars), de manière particulièrement préférée, de 3.10⁶ à 4.10⁶ Pa (30 à 40 bars).

10. Procédé selon l'une des revendications 2 à 9, dans lequel la température de compression se situe dans une plage entre environ 180° C et environ 240° C.

11. Procédé selon l'une des revendications 2 à 10, dans lequel la température de compression se situe entre environ 200° C et 225° C, de préférence à environ 210° C.

12. Procédé selon l'une des revendications 2 à 11, dans lequel au moins une cire présente à la température de compression, une viscosité à l'état fondu inférieure à 75 mPa.s, en particulier, inférieure à 50 mPa.s, de préférence, inférieure à 30 mPa.s.

13. Procédé selon l'une des revendications 2 à 12, comprenant en outre le séchage de la couche décorative avec le mélange appliqué avant la compression, et cela, à une température de séchage dans un intervalle de températures de séchage inférieure à la température de compression.

14. Procédé selon la revendication 13, dans lequel le séchage s'effectue jusqu'à une humidité résiduelle d'au plus 7 %, en particulier, d'au moins 6 %.

15. Procédé selon la revendication 13 ou 14, dans lequel l'intervalle de fusion de la cire est inférieure à la température de séchage.

16. Procédé selon l'une des revendications 13 à 15, dans lequel l'intervalle de fusion de la cire se trouve dans l'intervalle de températures de séchage.

17. Procédé selon l'une des revendications 13 à 16, dans lequel l'intervalle de températures de séchage est de 140 à 190° C.

18. Procédé selon la revendication 17, dans lequel, au cours du séchage, la température de séchage présente tout d'abord une évolution ascendante et présente notamment ensuite une évolution descendante.

19. Procédé selon l'une des revendications 13 à 18, dans lequel une durée de séchage est de 1 à 3 minutes, de préférence, d'environ 1,5 à 2 minutes.

20. Procédé selon l'une des revendications 1 à 19, dans lequel l'application de la cire s'effectue conjointement à l'application du mélange.

21. Procédé selon la revendication 20, dans lequel la cire est un composant du mélange.

22. Procédé selon l'une des revendications 1 à 21, dans lequel l'intervalle de fusion de la cire est supérieur à 60° C, de préférence supérieur à 80° C.

23. Procédé selon l'une des revendications précédentes, dans lequel au moins 90 % des particules dures présentent une taille inférieure à 80 µm.

24. Procédé selon l'une des revendications précédentes, dans lequel la résine synthétique thermodurcissable est une résine de mélamine.

25. Procédé selon l'une des revendications précédentes, dans lequel les particules dures sont des particules d'oxyde d'aluminium, en particulier, des particules de corindon.

26. Procédé selon l'une des revendications précédentes, dans lequel la cire est une cire Fischer - Tropsch.

27. Procédé selon l'une des revendications précédentes, dans lequel au moins une cire est contenue en mélange en une quantité de 0,1 à 5 % en poids du mélange, de préférence en une quantité de 0,2 à 3 % en poids, de manière particulièrement préférée, en une quantité de 0,25 à 1,5 % en poids.

28. Feuille décorative pré-imprégnée, pouvant être obtenue d'après le procédé selon la revendication 1, la feuille décorative pré-imprégnée comprenant :
une couche décorative et
un mélange appliqué sur la couche décorative, d'au moins une résine synthétique thermodurcissable, de particules dures et d'au moins une cire dont l'intervalle de fusion se situe en dessous d'une température d'environ 140° C.

29. Stratifié décoratif, comprenant
une couche décorative et
une couche de protection reliée fixement à la couche décorative, constituée d'un mélange d'au moins une résine synthétique thermodurcie, de particules dures et d'au moins une cire dont l'intervalle de fusion se situe en dessous d'une température d'environ 140° C, le stratifié décoratif pouvant être obtenu par compression de la feuille décorative pré-imprégnée selon la revendication 28, dans une presse à chaud.

30. Stratifié décoratif selon la revendication 29, dans lequel au moins une cire est une cire Fischer - Tropsch.

31. Stratifié décoratif selon la revendication 29 ou 30, dans lequel les particules dures sont des particules d'oxyde d'aluminium.

32. Stratifié décoratif selon l'une des revendications 29 à 31, dans lequel au moins 90 % des particules dures ont une taille inférieure à 80 µm.

33. Stratifié décoratif selon l'une des revendications 29 à 32, dans lequel les particules dures sont présentes dans le mélange en une quantité de 5 à 65 % en poids.

34. Stratifié décoratif selon l'une des revendications 29 à 33, dans lequel la résine synthétique thermodurcie est une résine de mélamine ou un mélange de résines de mélamine.

35. Stratifié décoratif selon l'une des revendications 29 à 34, dans lequel la cire est enrichie sur la surface du stratifié.

36. Stratifié décoratif selon la revendication 35, dans lequel une concentration de cire dans la couche protectrice présente un gradient négatif dans le sens de la profondeur.

37. Stratifié décoratif selon l'une des revendications 29 à 36, dans lequel la cire a la plus grande proportion en masse de tous les composants sur la surface du stratifié, et constitue en particulier plus de la moitié de ceux-ci.

38. Stratifié décoratif selon l'une des revendications 29 à 37, dans lequel une épaisseur de couche protectrice moyenne est de 20 à 30 µm.

39. Plaque de stratifié décoratif, comprenant un substrat porteur sur lequel le stratifié décoratif selon l'une des revendications 29 à 38 est appliqué sur toute la surface.

40. Utilisation de la plaque de stratifié décoratif selon la revendication 39 comme revêtement de sol.
